(19) Europäisches Patentamt
European Patent Office
Office européen des brevets

(11) **EP 3 016 465 A1**

(12) **EUROPEAN PATENT APPLICATION**

(43) Date of publication:
**04.05.2016 Bulletin 2016/18**

(51) Int Cl.:
***H04W 72/10*** *(2009.01)*

(21) Application number: **15192356.2**

(22) Date of filing: **30.10.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **31.10.2014 US 201462073353 P**

(71) Applicant: **ASUSTeK Computer Inc.**
**11259 Taipei (TW)**

(72) Inventors:
• **CHEN, Wei-Yu**
  **Taipei City 11259 (TW)**
• **PAN, Li-Te**
  **Taipei City 11259 (TW)**

(74) Representative: **Hoefer & Partner Patentanwälte mbB**
**Pilgersheimer Straße 20**
**81543 München (DE)**

(54) **METHOD AND DEVICE FOR HANDLING MULTIPLE D2D (DEVICE TO DEVICE) GRANTS IN A SA (SCHEDULING ASSIGNMENT) PERIOD IN A WIRELESS COMMUNICATION SYSTEM**

(57)   A method and apparatus are disclosed for handling multiple D2D grants for multiple sidelinks in decreasing order of priority. In one embodiment, the method includes a first UE participates in a first sidelink and a second sidelink, wherein a priority of the first sidelink is higher than a priority of the second sidelink. The method also includes the first UE receiving a first D2D grant and a second D2D grant from a base station in a first SA period. The method further includes the first UE serving the first sidelink with the first D2D grant and afterward, the first UE cannot serve the first sidelink with another D2D grant for the same SA period as the first D2D grant. In addition, the method includes the first UE serving the second sidelink with the second D2D grant and afterward, the first UE cannot serve the second sidelink with another D2D grant for the same SA period as the second D2D grant. Furthermore, the method includes the first UE using the first D2D grant for transmitting available data of the first sidelink and using the second D2D grant for transmitting available data of the second sidelink in a second SA period, wherein the second SA period and the first SA period are different SA periods.

**FIG. 1**

**Description**

**CROSS-REFERENCE TO RELATED APPLICATIONS**

The present Application claims the benefit of U.S. Provisional Patent Application Serial No. 62/073,353 filed on October 31, 2014, the entire disclosure of which is incorporated herein by reference.

**FIELD**

This disclosure generally relates to wireless communication networks, and more particularly, to a method and apparatus for handling multiple D2D grants for multiple sidelinks in decreasing order of priority in a wireless communication system.

**BACKGROUND**

With the rapid rise in demand for communication of large amounts of data to and from mobile communication devices, traditional mobile voice communication networks are evolving into networks that communicate with Internet Protocol (IP) data packets. Such IP data packet communication can provide users of mobile communication devices with voice over IP, multimedia, multicast and on-demand communication services.

An exemplary network structure for which standardization is currently taking place is an Evolved Universal Terrestrial Radio Access Network (E-UTRAN). The E-UTRAN system can provide high data throughput in order to realize the above-noted voice over IP and multimedia services. The E-UTRAN system's standardization work is currently being performed by the 3GPP standards organization. Accordingly, changes to the current body of 3GPP standard are currently being submitted and considered to evolve and finalize the 3GPP standard.

**SUMMARY**

The invention is defined in the independent claims. The dependent claims define preferred embodiments. A method and apparatus are disclosed for handling multiple D2D grants for multiple sidelinks in decreasing order of priority. In one embodiment, the method includes a first UE participates in a first sidelink and a second sidelink, wherein a priority of the first sidelink is higher than a priority of the second sidelink. The method also includes the first UE receiving a first D2D grant and a second D2D grant from a base station in a first SA period. The method further includes the first UE serving the first sidelink with the first D2D grant and afterward, the first UE cannot serve the first sidelink with another D2D grant for the same SA period as the first D2D grant. In addition, the method includes the first UE serving the second sidelink with the second D2D grant and afterward, the first UE cannot serve the second sidelink with another D2D grant for the same SA period as the second D2D grant. Furthermore, the method includes the first UE using the first D2D grant for transmitting available data of the first sidelink and using the second D2D grant for transmitting available data of the second sidelink in a second SA period, wherein the second SA period and the first SA period are different SA periods.

**BRIEF DESCRIPTION OF THE DRAWINGS**

FIG. 1 shows a diagram of a wireless communication system according to one exemplary embodiment.

FIG. 2 is a block diagram of a transmitter system (also known as access network) and a receiver system (also known as user equipment or UE) according to one exemplary embodiment.

FIG. 3 is a functional block diagram of a communication system according to one exemplary embodiment.

FIG. 4 is a functional block diagram of the program code of FIG. 3 according to one exemplary embodiment.

FIG. 5 is a diagram according to one exemplary embodiment.

FIG. 6 is a diagram according to one exemplary embodiment.

FIG. 7 is a flow chart according to one exemplary embodiment.

## DETAILED DESCRIPTION

The exemplary wireless communication systems and devices described below employ a wireless communication system, supporting a broadcast service. Wireless communication systems are widely deployed to provide various types of communication such as voice, data, and so on. These systems may be based on code division multiple access (CDMA), time division multiple access (TDMA), orthogonal frequency division multiple access (OFDMA), 3GPP LTE (Long Term Evolution) wireless access, 3GPP LTE-A or LTE-Advanced (Long Term Evolution Advanced), 3GPP2 UMB (Ultra Mobile Broadband), WiMax, or some other modulation techniques.

In particular, the exemplary wireless communication systems devices described below may be designed to support one or more standards such as the standard offered by a consortium named "3rd Generation Partnership Project" referred to herein as 3GPP, including: SP-110638, "WID on Proposal for a study on Proximity-based Services"; RAN2#87-bis chairman's note; RAN1#77 chairman's note; RAN1#78 chairman's note; RAN1#78-bis chairman's note; R1-143459, "LS on RRC parameters for ProSe LTE D2D"; and TS36.321 V11.2.0, "Medium Access Control (MAC) protocol specification". The standards and documents listed above are hereby expressly incorporated by reference in their entirety.

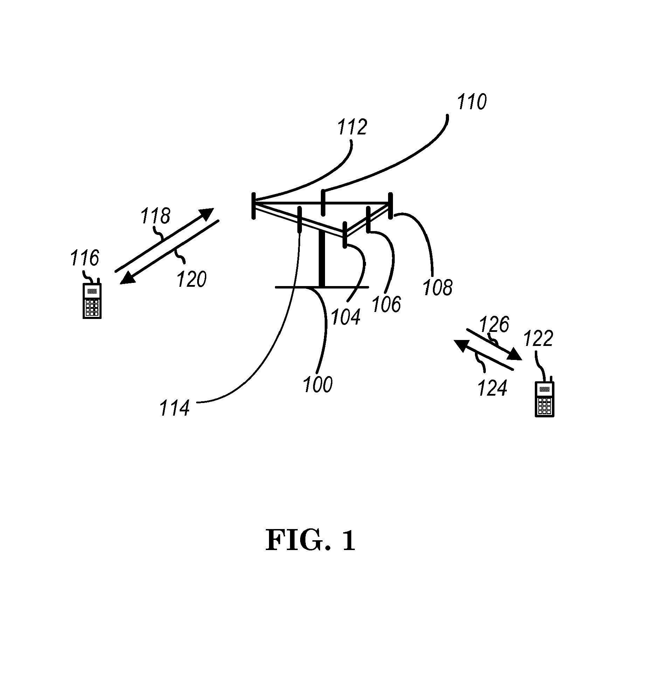

FIG. 1 shows a multiple access wireless communication system according to one embodiment of the invention. An access network 100 (AN) includes multiple antenna groups, one including 104 and 106, another including 108 and 110, and an additional including 112 and 114. In FIG. 1, only two antennas are shown for each antenna group, however, more or fewer antennas may be utilized for each antenna group. Access terminal 116 (AT) is in communication with antennas 112 and 114, where antennas 112 and 114 transmit information to access terminal 116 over forward link 120 and receive information from access terminal 116 over reverse link 118. Access terminal (AT) 122 is in communication with antennas 106 and 108, where antennas 106 and 108 transmit information to access terminal (AT) 122 over forward link 126 and receive information from access terminal (AT) 122 over reverse link 124. In a FDD system, communication links 118, 120, 124 and 126 may use different frequency for communication. For example, forward link 120 may use a different frequency then that used by reverse link 118.

Each group of antennas and/or the area in which they are designed to communicate is often referred to as a sector of the access network. In the embodiment, antenna groups each are designed to communicate to access terminals in a sector of the areas covered by access network 100.

In communication over forward links 120 and 126, the transmitting antennas of access network 100 may utilize beamforming in order to improve the signal-to-noise ratio of forward links for the different access terminals 116 and 122. Also, an access network using beamforming to transmit to access terminals scattered randomly through its coverage causes less interference to access terminals in neighboring cells than an access network transmitting through a single antenna to all its access terminals.

An access network (AN) may be a fixed station or base station used for communicating with the terminals and may also be referred to as an access point, a Node B, a base station, an enhanced base station, an evolved Node B (eNB), or some other terminology. An access terminal (AT) may also be called user equipment (UE), a wireless communication device, terminal, access terminal or some other terminology.

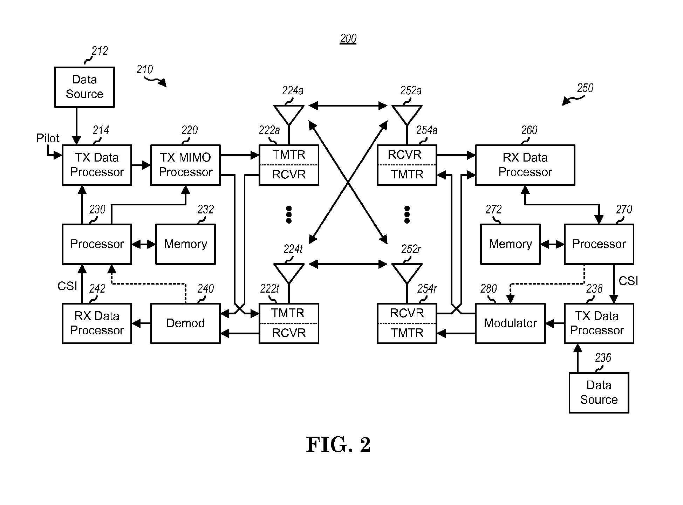

FIG. 2 is a simplified block diagram of an embodiment of a transmitter system 210 (also known as the access network) and a receiver system 250 (also known as access terminal (AT) or user equipment (UE)) in a MIMO system 200. At the transmitter system 210, traffic data for a number of data streams is provided from a data source 212 to a transmit (TX) data processor 214.

In one embodiment, each data stream is transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QPSK, M-PSK, or M-QAM) selected for that data stream to provide modulation symbols. The data rate, coding, and modulation for each data stream may be determined by instructions performed by processor 230.

The modulation symbols for all data streams are then provided to a TX MIMO processor 220, which may further process the modulation symbols (e.g., for OFDM). TX MIMO processor 220 then provides $N_T$ modulation symbol streams to $N_T$ transmitters (TMTR) 222a through 222t. In certain embodiments, TX MIMO processor 220 applies beamforming weights to the symbols of the data streams and to the antenna from which the symbol is being transmitted.

Each transmitter 222 receives and processes a respective symbol stream to provide one or more analog signals, and further conditions (e.g., amplifies, filters, and upconverts) the analog signals to provide a modulated signal suitable for transmission over the MIMO channel. $N_T$ modulated signals from transmitters 222a through 222t are then transmitted from $N_T$ antennas 224a through 224t, respectively.

At receiver system 250, the transmitted modulated signals are received by $N_R$ antennas 252a through 252r and the received signal from each antenna 252 is provided to a respective receiver (RCVR) 254a through 254r. Each receiver 254 conditions (e.g., filters, amplifies, and downconverts) a respective received signal, digitizes the conditioned signal to provide samples, and further processes the samples to provide a corresponding "received" symbol stream.

An RX data processor 260 then receives and processes the $N_R$ received symbol streams from $N_R$ receivers 254 based on a particular receiver processing technique to provide $N_T$ "detected" symbol streams. The RX data processor 260 then demodulates, deinterleaves, and decodes each detected symbol stream to recover the traffic data for the data stream. The processing by RX data processor 260 is complementary to that performed by TX MIMO processor 220 and TX data processor 214 at transmitter system 210.

A processor 270 periodically determines which pre-coding matrix to use (discussed below). Processor 270 formulates a reverse link message comprising a matrix index portion and a rank value portion.

The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beamforming weights then processes the extracted message.

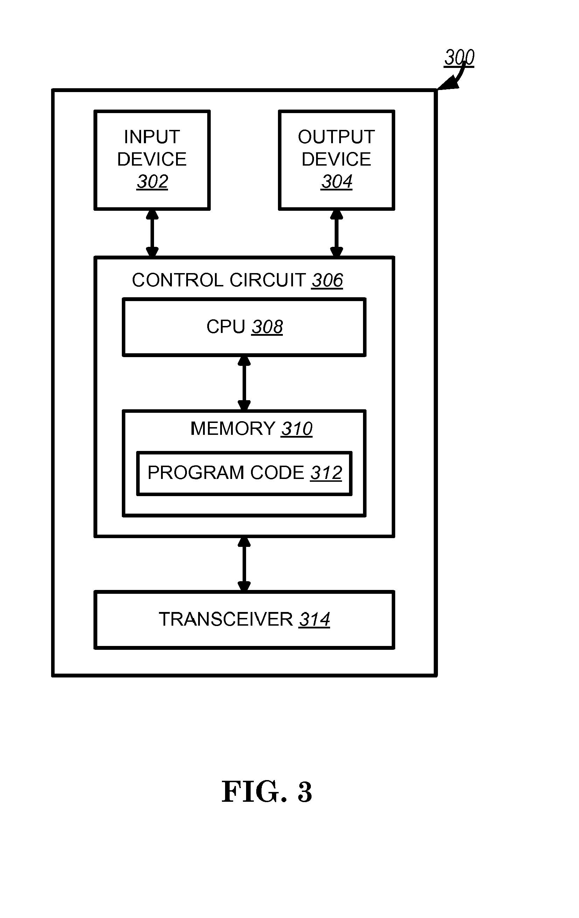

Turning to FIG. 3, this figure shows an alternative simplified functional block diagram of a communication device according to one embodiment of the invention. As shown in FIG. 3, the communication device 300 in a wireless communication system can be utilized for realizing the UEs (or ATs) 116 and 122 in FIG. 1, and the wireless communications system is preferably the LTE system. The communication device 300 may include an input device 302, an output device 304, a control circuit 306, a central processing unit (CPU) 308, a memory 310, a program code 312, and a transceiver 314. The control circuit 306 executes the program code 312 in the memory 310 through the CPU 308, thereby controlling an operation of the communications device 300. The communications device 300 can receive signals input by a user through the input device 302, such as a keyboard or keypad, and can output images and sounds through the output device 304, such as a monitor or speakers. The transceiver 314 is used to receive and transmit wireless signals, delivering received signals to the control circuit 306, and outputting signals generated by the control circuit 306 wirelessly. The communication device 300 in a wireless communication system can also be utilized for realizing the AN 100 in FIG. 1.

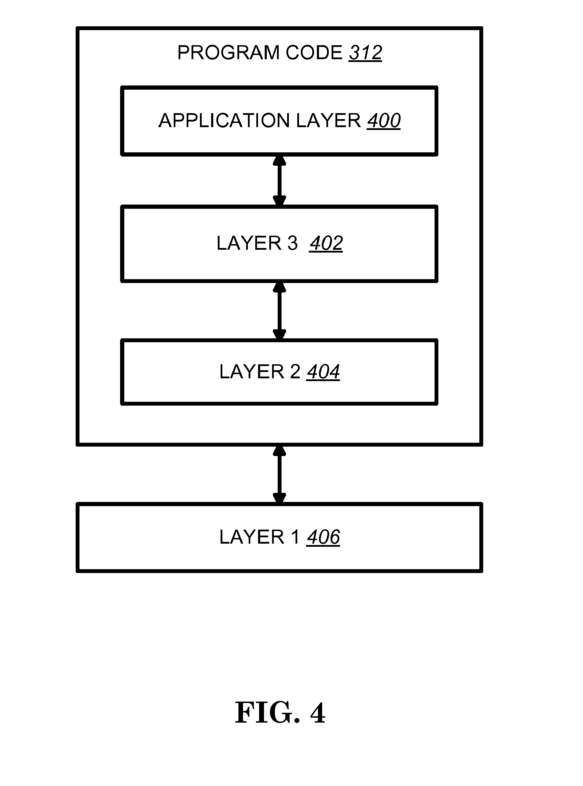

FIG. 4 is a simplified block diagram of the program code 312 shown in FIG. 3 in accordance with one embodiment of the invention. In this embodiment, the program code 312 includes an application layer 400, a Layer 3 portion 402, and a Layer 2 portion 404, and is coupled to a Layer 1 portion 406. The Layer 3 portion 402 generally performs radio resource control. The Layer 2 portion 404 generally performs link control. The Layer 1 portion 406 generally performs physical connections.

3GPP SP-110638 proposes a new study item on proximity-based services (ProSe), i.e. D2D services. The justification and objective of this study item are described in 3GPP SP-110638 as follows:

### 3 Justification

Proximity-based applications and services represent a recent and enormous socio-technological trend. The principle of these applications is to discover instances of the applications running in devices that are within proximity of each other, and ultimately also exchange application-related data. In parallel, there is interest in proximity-based discovery and communications in the public safety community.

Current 3GPP specification are only partially suited for such needs, since all such traffic and signalling would have to be routed in the network, thus impacting their performance and adding un-necessary load in the network. These current limitations are also an obstacle to the creation of even more advanced proximity-based applications.

In this context, 3GPP technology, has the opportunity to become the platform of choice to enable proximity-based discovery and communication between devices, and promote a vast array of future and more advanced proximity-based applications.

### 4 Objective

The objective is to study use cases and identify potential requirements for an operator network controlled discovery and communications between devices that are in proximity, under continuous network control, and are under a 3GPP network coverage, for:

1. Commercial/social use

2. Network offloading

3. Public Safety

4. Integration of current infrastructure services, to assure the consistency of the user experience including reachability and mobility aspects
Additionally, the study item will study use cases and identify potential requirements for

5. Public Safety, in case of absence of EUTRAN coverage (subject to regional regulation and operator policy, and limited to specific public-safety designated frequency bands and terminals)

Use cases and service requirements will be studied including network operator control, authentication, authorization, accounting and regulatory aspects.
The study does not apply to GERAN or UTRAN.
3GPP RAN2#87-bis chairman's note states:

3. For sidelink transmission, UE serves groups in decreasing order of priority (similar to legacy LCP). It is FFS whether the priority is provided by upper layer. If the priority is not provided by upper layer, the setting of priority is up to UE implementation.

[...]

6. The UM window size is set to 0.

[...]

=> One HARQ entity for D2D reception and one HARQ entity for D2D transmission.

=> One HARQ process per SA the RX UE is interested in.

The first portion of the statement above describes that a UE (User Equipment) should use the received resource to serve different groups it associated to. The serving would satisfy the demand of each group in decreasing order of group priority. The second portion of the statement above is that the RLC (Radio Link Control) UM (Unacknowleged Mode) entity of a sidelink cannot reorder the packets delivered from lower layer. Those packets will be directly delivered to upper layer.
In 3GPP RAN1#78, portions of detail contents of the D2D (Device to Device) grant, called Mode1 grant, or called ProSe grant were designed. And the D2D grant refers to the next instance of SA (Scheduling Assignment) resource pool, which is also called or known as the next SA period. 3GPP RAN1#78 chairman's note states:

**Agreement:**

|  | 1.4 MHz | 20MHz |
|---|---|---|
| Hopping flag | 1 | 1 |
| Data RB allocation | 5 | 13 |
| T-RPT index | 7 | 7 |
| SA resource index | 6 | 6 |
| TPC | 1 | 1 |
| **TOTAL:** | **20** | **28** |
| Rel-8 Format 0 | 21 | 28 |

(with obvious interpolation to the other bandwidths)

- SA resource index is an index into the SA resource pool and indicates both time and frequency dimensions.

  ○ FFS whether the mapping of the indices to the pool is fixed in the specification or configured by higher layer signalling
∘ Details FFS

- TPC bit switches between maximum available power and open-loop power control
- T-RPT index is 7 bits in both D2D Grant and SA for both Mode 1 and Mode 2
- Mode 1 grant refers to the next instance of SA resource pool that starts at least 4ms after the subframe on which the Mode 1 grant is transmitted

In RAN1#77, it was defined that retransmission of the same SA is supported and the retransmission resource is fixed in the specification. 3GPP RAN1#77 chairman's note states:

**Agreement:**

- For both Mode 1 and Mode 2, resource for single transmission (i.e. 1 subframe) of SA is FFS between 1 PRB-pair and 2 PRB-pair

  - Retransmissions of SA are supported

    - FFS whether Chase combining

  - Total number of transmissions of SA is FFS between

    - fixed to a single value in specifications, and
    - (pre-)configurable among two values
    - FFS until RAN1#78 what these values are

  - Number(s) of SA subframes in the SA resource pool FFS until RAN1#78

- Given a certain SA resource pool and time/frequency resource that is used for a transmission of an SA message by a UE, the other time/frequency resources used by the same UE for transmission(s) of the same SA message within an SA resource period are known and fixed in the specification

  - Details FFS
  - FFS on whether/how to minimize the collision of transmissions in Mode 2

In RAN1#78, it was further defined that the transmission of the same SA is two and both are RV0. 3GPP RAN1#78 chairman's note states:

**Agreements:**

- Number of transmissions: Always 2

- Both transmissions use RV0

In the RAN1#78-bis meeting, the detail of SA resource index in Mode1 grant was introduced. The resource assigned by SA resource index is only for one SA's transmission and retransmission used. 3GPP RAN1#78-bis chairman's note states:

**Agreement:**

- SA resource index is defined to be S

- For Mode 1, this is the 6 bits in D2D DCI (for Mode 1)
- For Mode 2, it is selected by UE
- S is assumed to be between 0 and floor(Nf/2)*Nt where

  • Nf is number of frequency resources in the SA resource pool
  • Nt is number of sub-frames in SA resource pool

• SA resource pattern is given by

  - First transmission given by

$$n_{t_1} \;=\; mod(s, N_t)$$

$$n_{f_1} \;=\; floor(s/N_t)$$

  - Second transmission given by

$$n_{t_2} \;=\; mod(s + mod(floor(s/N_t), N_s) + 1, N_t)$$

$$n_{f_2} \;=\; floor(N_f/2) + n_{f1}$$

$$N_s = N_t - 1$$

  - The resources are indices within the SA resource pool

3GPP R1-143459 provides a definition for SA period. In general, the SA period is the period for repeating SA transmission resource in a cell. In particular, 3GPP R1-143459 states:

| 36.211 | FFS | SA & Mode 2 data period. | New parameter | saPeriod | Period over which resources allocated in a cell for SA and Mode 2 data transmissions occur. This parameter is relevant to resource pool of the serving and neighboring cells. |
|---|---|---|---|---|---|

3GPP TS 36.321 describes the HARQ operation as follows:

**5.4.2 HARQ operation**

**5.4.2.1 HARQ entity**

There is one HARQ entity at the UE for each Serving Cell with configured uplink, which maintains a number of parallel HARQ processes allowing transmissions to take place continuously while waiting for the HARQ feedback on the successful or unsuccessful reception of previous transmissions.

The number of parallel HARQ processes per HARQ entity is specified in [2], clause 8. When the physical layer is configured for uplink spatial multiplexing [2], there are two HARQ processes associated with a given TTI. Otherwise there is one HARQ process associated with a given TTI.

At a given TTI, if an uplink grant is indicated for the TTI, the HARQ entity identifies the HARQ process(es) for which a transmission should take place. It also routes the received HARQ feedback (ACK/NACK information), MCS and resource, relayed by the physical layer, to the appropriate HARQ process(es).

When TTI bundling is configured, the parameter TTI_BUNDLE_SIZE provides the number of TTIs of a TTI bundle. TTI bundling operation relies on the HARQ entity for invoking the same HARQ process for each transmission that is part of the same bundle. Within a bundle HARQ retransmissions are non-adaptive and triggered without waiting for feedback from previous transmissions according to TTI_BUNDLE_SIZE. The HARQ feedback of a bundle is only received for the last TTI of the bundle (i.e the TTI corresponding to TTI_BUNDLE_SIZE), regardless of whether a transmission in that TTI takes place or not (e.g. when a measurement gap occurs). A retransmission of a TTI bundle is also a TTI bundle. TTI bundling is not supported when the UE is configured with one or more SCells with configured uplink.

TTI bundling is not supported for RN communication with the E-UTRAN in combination with an RN subframe configuration.

For transmission of Msg3 during Random Access (see section 5.1.5) TTI bundling does not apply.

For each TTI, the HARQ entity shall:

- identify the HARQ process(es) associated with this TTI, and for each identified HARQ process:
- if an uplink grant has been indicated for this process and this TTI:

    - if the received grant was not addressed to a Temporary C-RNTI on PDCCH and if the NDI provided in the associated HARQ information has been toggled compared to the value in the previous transmission of this HARQ process; or
    - if the uplink grant was received on PDCCH for the C-RNTI and the HARQ buffer of the identified process is empty; or
    - if the uplink grant was received in a Random Access Response:

        - if there is a MAC PDU in the Msg3 buffer and the uplink grant was received in a Random Access Response:

            - obtain the MAC PDU to transmit from the Msg3 buffer.

        - else:

            - obtain the MAC PDU to transmit from the "Multiplexing and assembly" entity;

        - deliver the MAC PDU and the uplink grant and the HARQ information to the identified HARQ process;
        - instruct the identified HARQ process to trigger a new transmission.

    - else:

        - deliver the uplink grant and the HARQ information (redundancy version) to the identified HARQ process;
        - instruct the identified HARQ process to generate an adaptive retransmission.

    - else, if the HARQ buffer of this HARQ process is not empty:

        - instruct the identified HARQ process to generate a non-adaptive retransmission.

When determining if NDI has been toggled compared to the value in the previous transmission UE shall ignore NDI received in all uplink grants on PDCCH for its Temporary C-RNTI.

### 5.4.2.2 HARQ process

Each HARQ process is associated with a HARQ buffer.

Each HARQ process shall maintain a state variable CURRENT_TX_NB, which indicates the number of transmissions that have taken place for the MAC PDU currently in the buffer, and a state variable HARQ_FEEDBACK, which indicates the HARQ feedback for the MAC PDU currently in the buffer. When the HARQ process is established, CURRENT_TX_NB shall be initialized to 0.

The sequence of redundancy versions is 0, 2, 3, 1. The variable CURRENT_IRV is an index into the sequence of redundancy versions. This variable is up-dated modulo 4. New transmissions are performed on the resource and with the MCS indicated on PDCCH or Random Access Response. Adaptive retransmissions are performed on the resource and, if provided, with the MCS indicated on PDCCH. Non-adaptive retransmission is performed on the same resource and with the same MCS as was used for the last made transmission attempt.

The UE is configured with a Maximum number of HARQ transmissions and a Maximum number of Msg3 HARQ transmissions by RRC: *maxHARQ-Tx* and *maxHARQ-Msg3Tx* respectively. For transmissions on all HARQ processes and all logical channels except for transmission of a MAC PDU stored in the Msg3 buffer, the maximum number of transmissions shall be set to *maxHARQ-Tx*. For transmission of a MAC PDU stored in the Msg3 buffer, the maximum number of transmissions shall be set to *maxHARQ-Msg3Tx*.

When the HARQ feedback is received for this TB, the HARQ process shall:

- set HARQ_FEEDBACK to the received value.

If the HARQ entity requests a new transmission, the HARQ process shall:

- set CURRENT_TX_NB to 0;
- set CURRENT_IRV to 0;
- store the MAC PDU in the associated HARQ buffer;
- store the uplink grant received from the HARQ entity;
- set HARQ_FEEDBACK to NACK;
- generate a transmission as described below.

If the HARQ entity requests a retransmission, the HARQ process shall:

- increment CURRENT_TX_NB by 1;
- if the HARQ entity requests an adaptive retransmission:

  - store the uplink grant received from the HARQ entity;
  - set CURRENT_IRV to the index corresponding to the redundancy version value provided in the HARQ information;
  - set HARQ_FEEDBACK to NACK;
  - generate a transmission as described below.

- else if the HARQ entity requests a non-adaptive retransmission:

  - if HARQ_FEEDBACK = NACK:

    - generate a transmission as described below.

NOTE: When receiving a HARQ ACK alone, the UE keeps the data in the HARQ buffer.
NOTE: When no UL-SCH transmission can be made due to the occurrence of a measurement gap, no HARQ feedback can be received and a non-adaptive retransmission follows.

To generate a transmission, the HARQ process shall:

- if the MAC PDU was obtained from the Msg3 buffer; or
- if there is no measurement gap at the time of the transmission and, in case of retransmission, the retransmission does not collide with a transmission for a MAC PDU obtained from the Msg3 buffer in this TTI:
- instruct the physical layer to generate a transmission according to the stored uplink grant with the redundancy version corresponding to the CURRENT_IRV value;
- increment CURRENT_IRV by 1;
- if there is a measurement gap at the time of the HARQ feedback reception for this transmission and if the MAC PDU was not obtained from the Msg3 buffer:

  - set HARQ_FEEDBACK to ACK at the time of the HARQ feedback reception for this transmission.

After performing above actions, the HARQ process then shall:

- if CURRENT_TX_NB = maximum number of transmissions - 1:

  - flush the HARQ buffer;

For D2D communication, a new grant called D2D grant is introduced and should be utilized by a specific source/destination combination (i.e., a sidelink) in an instance of SA period. Besides, if a UE participates in multiple sidelinks and receives from the base station only one D2D grant, the UE shall serve the sidelinks in decreasing order of priority with the D2D grant. In that situation, only the highest priority sidelink could enjoy the D2D grant firstly.

The discussion below is about how a UE would serve multiple sidelinks when the UE receives multiple D2D grants for one instance of SA period. The assumption is that a UE participates in two sidelinks (e.g., Sidelink1 with high priority and Sidelink2 with low priority). Each sidelink is for a destination. The destination can be a UE or a group.

In some cases, the base station may provide insufficient resource for Sidelink1 of the UE for an instance of SA period. The situation may occur because of unexpected data coming, scheduling consideration or other possible reasons. In this situation, it may not be appropriate for the base station to allocate extra D2D grants for Sidelink2. The main reason for such scheduling limitation is that the UE may still serve the Sidelink1 with the new allocated D2D grant to consume the remaining pending data in the buffer of Sidelink1. If the UE only establishes one HARQ (Hybrid Automatic Repeat Request) process to the sidelinks which has data available for transmission, there will be issues on HARQ process maintenance during the data transmission. One exemplary example is that the HARQ process buffer of Sidelink1 storing the data constructed with the first allocated D2D grant would be flushed due to the generation of data constructed with the second allocated D2D grant. In such case, the successful rate of reception would be reduced.

Moreover, if the reception side of a sidelink receives multiple different SA signals from the transmission side of the sidelink, the reception side would create many HARQ processes depending on the amount of received different SA signals. In such case, the transmission side of the sidelink also creates the same number of HARQ processes as amount of sent different SA signals. However, based on the current agreements, the UM entity cannot reorder the packets received from the lower layer. Also, it would be difficult to guarantee the packets delivery order between different HARQ processes associated with the same sidelink. Therefore, it would be inappropriate for the base station to allocate any new D2D grants to the UE in an instance of SA period when the Sidelink1 is already scheduled for the instance of SA period.

Furthermore, the scheduling limitation may cause delay or starvation for Sidelink2. If the base station still has plenty of D2D resources to allocate but cannot do so due to such scheduling limitation, the system performance would be degraded.

To resolve the issue, a rule for UE to serve multiple sidelinks with multiple D2D grants should be adopted. In general, the rule is that when a UE participating in multiple sidelinks receives multiple D2D grants in an instance of SA period, the UE shall serve only one D2D grant to each sidelink. The process of associating D2D grants to sidelinks could vary.

Preferably, upon a grant is received in an instance of SA period, the UE could associate (or could decide to serve) the grant to a sidelink containing available data among participated sidelinks, wherein the priority of the sidelink is highest and the sidelink is not associated with any grant yet in the SA period. Preferably, the association between received D2D grant and the sidelink containing available data could be based on at least the buffer status of sidelink, the priority of sidelink and the amount of resource provided in D2D grant. More specifically, a high priority sidelink could select a D2D grant among the received D2D grant(s) before the low priority sidelink, wherein the D2D grant has not yet been selected by any sidelink. Furthermore, a sidelink could select a D2D grant based on the sidelink's buffer status. The D2D grant could be the one which provides the closest amount of resources to the amount of available data of the sidelink.

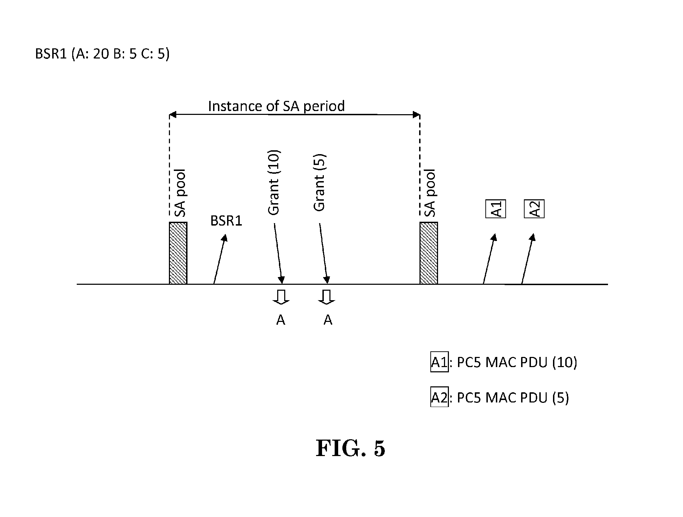

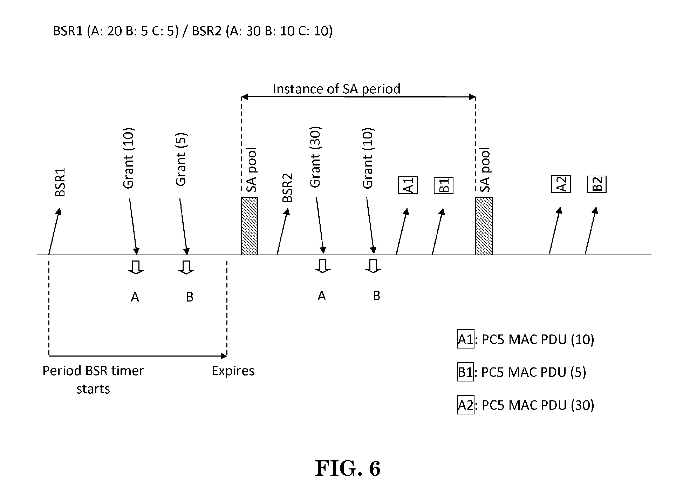

FIG. 5 illustrates an example before application of the present invention, while FIG. 6 illustrates the example after application of the present invention. In particular, FIG. 5 illustrates an example of UE serving multiple sidelinks with multiple D2D grants with the issue discussed above. In FIG. 5, "A" denotes Sidelink1; "B" denotes Sidelink2; and "C" denotes Sidelink3. Furthermore, "Grant (10)" means a D2D grant in size of 10 bytes; and "Grant (5)" means a D2D grant in size of 5 bytes. In addition, the notation "A: 20" in BSR1 means the amount of pending data of Sidelink1 is 20 bytes; the notation "B:5" in BSR1 means the amount of pending data of Sidelink2 is 5 bytes; and the notation "C:5" in BSR1 means the amount of pending data of Sidelink3 is 5 bytes.

FIG. 6 illustrates the solution for the example of the UE serving multiple sidelinks with multiple D2D grants shown in FIG. 5. In FIG. 6, "A" denotes Sidelink1; "B" denotes Sidelink2; and "C" denotes Sidelink3. Furthermore, "Grant (10)" means a D2D grant in size of 10 bytes; and "Grant (5)" means a D2D grant in size of 5 bytes. In addition, the notation "A: 20" in BSR1 means the amount of pending data of Sidelink1 is 20 bytes; the notation "B:5" in BSR1 means the amount of pending data of Sidelink2 is 5 bytes; and the notation "C:5" in BSR1 means the amount of pending data of Sidelink3 is 5 bytes. Similar symbols and notations are applicable to BSR2.

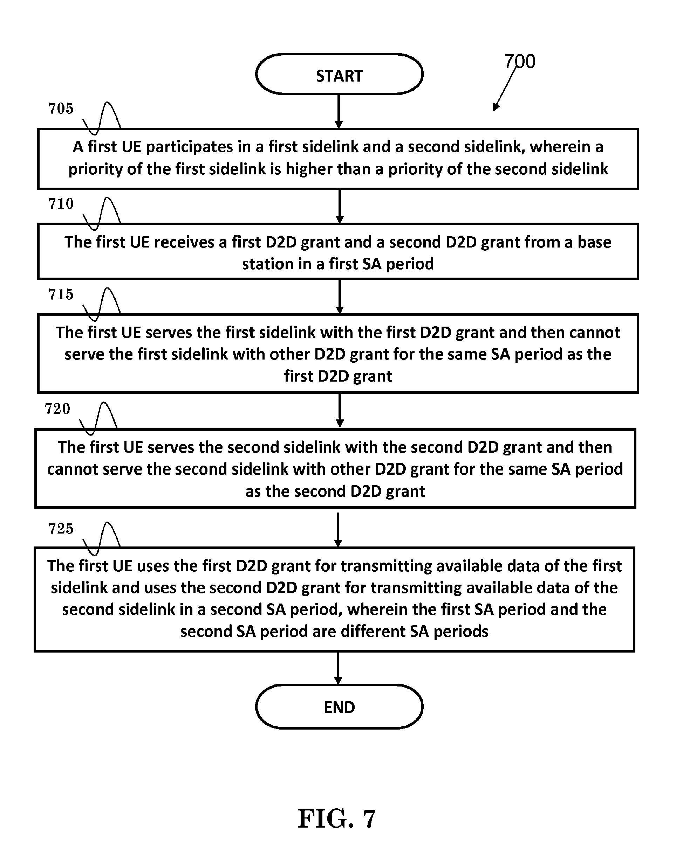

FIG. 7 illustrates a flow chart 700 from the perspective of a UE in accordance with one exemplary embodiment. In step 705, a first UE participates in a first sidelink and a second sidelink, wherein a priority of the first sidelink is higher than a priority of the second sidelink. In step 710, the first UE receives a first D2D grant and a second D2D grant from a base station in a first SA period. In step 715, the first UE serves the first sidelink with the first D2D grant and afterward, the first UE cannot serve the first sidelink with another D2D grant for the same SA period as the first D2D grant. In step 720, the first UE serves the second sidelink with the second D2D grant and afterward, the first UE cannot serve the second sidelink with another D2D grant for the same SA period as the second D2D grant. In step 725, the first UE uses the first D2D grant for transmitting available data of the first sidelink and uses the second D2D grant for transmitting available data of the second sidelink in a second SA period, wherein the first SA period and the second SA period are different SA periods.

Preferably, the first sidelink has an amount of available data that is closer to an amount of data accommodated by the first D2D grant than to an amount of data accommodated by the second D2D grant.

Preferably, the first UE receives a fourth D2D grant after it receives the first D2D grant and the second D2D grant in the first SA period, and discards the fourth D2D grant if resources indicated by the fourth D2D grant are less than resources indicated by the first D2D grant and also less than resources indicated by the second D2D grant and no sidelink can be served with the fourth D2D grant.

Preferably, the first UE reports a buffer status of the first sidelink and a buffer status of the second sidelink to the base station before a beginning of the second SA period. Furthermore, the first UE reports the buffer status of the first sidelink and the buffer status of the second sidelink before the first D2D grant and the second D2D grant are received. In addition, the first UE transmits a buffer status report including the buffer status of the first sidelink and the buffer status of the second sidelink to the base station, wherein the buffer status report is a ProSe BSR.

Preferably, the priority of the first sidelink and the priority of the second sidelink are provided by a higher layer in the first UE, or are configured by a network. Furthermore, the first sidelink could be associated to a second UE or to a first destination, and the second sidelink could be associated to a third UE or to a second destination. In addition, the second SA period could preferably be a SA period after the first SA period. Also, neither the first D2D grant nor the second D2D grant may accommodate all available data of the first sidelink.

Preferably, the second sidelink will not be served if the first UE receives only one D2D grant. Also, the first sidelink and the second sidelink have available data for transmission.

Preferably, the first sidelink has an amount of available data that is closer to the amount of resources provided in the first D2D grant than to the amount of resources provided in the second D2D grant.

Preferably, the first UE reports a buffer status of the first sidelink and a buffer status of the second sidelink to a base station in the SA period, wherein the first UE reports the buffer status of the first sidelink is reported before the buffer status of the second sidelink in the SA period before the first D2D grant and the second D2D grant are received. Furthermore, if the first UE reports buffer status of the first sidelink and the buffer status of the second sidelink before receiving any D2D grant, the second sidelink preferably should not be served by any received D2D grant before the first sidelink is served by a third D2D grant. In addition, the first UE would preferably discard a fourth D2D grant if each sidelink which containing available data belonging to the first UE is served by a D2D grant. In addition, the first UE could preferably use the first D2D grant and the second D2D grant in a next SA period.

Preferably, the first UE could construct a first MAC (Medium Access Control) PDU (Protocol Data Unit) with the first D2D grant, wherein data of the first sidelink contained in the first MAC PDU comes from a first UM entity established in the first UE. Furthermore, the first UE could preferably construct a second MAC PDU with the second D2D grant, wherein data of the second sidelink contained in the second MAC PDU comes from a second UM entity established in the first UE.

Preferably, the first UE establishes one to one mapping between HARQ (Hybrid Automatic Repeat Request) processes in transmission HARQ entity and sidelinks belonging to the first UE. More specifically, the first UE could preferably establish a first HARQ (Hybrid Automatic Repeat Request) process and a first HARQ process buffer corresponding to the first HARQ process, wherein the first HARQ process and the first HARQ process buffer are associated with the first sidelink. The first UE could preferably establish the first HARQ process and the first HARQ process buffer upon receipt of the first D2D grant.

The first UE could also preferably establish a second HARQ process and a second HARQ process buffer corresponding to the second HARQ process, wherein the second HARQ process and the second HARQ process buffer are associated with the second sidelink. The first UE could preferably establish the second HARQ process and the second HARQ process buffer upon receipt of the second D2D grant.

Referring back to FIGS. 3 and 4, in one embodiment from the perspective of a UE, the device 300 includes a program code 312 stored in memory 310 for handling handling multiple D2D grants received in a SA period. The CPU 308 could execute program code 312 (i) to participate in at least a first sidelink and a second sidelink, wherein the priority of the first sidelink is higher than the priority of the second sidelink, (ii) to receive at least a first D2D grant and a second D2D grant in the SA period, and (iii) to use the first D2D grant for transmitting available data of the first sidelink and to use the second D2D grant for transmitting available data of the second sidelink, wherein the first D2D grant cannot accommodate all available data of the first sidelink, and the first sidelink and the second sidelink has not yet been served by any D2D grant in the SA period. In addition, the CPU 308 can execute the program code 312 to perform all of the above-described actions and steps, especially the ones described in para. [0049] to [0059], or others described herein.

Various aspects of the disclosure have been described above. It should be apparent that the teachings herein may be embodied in a wide variety of forms and that any specific structure, function, or both being disclosed herein is merely representative. Based on the teachings herein one skilled in the art should appreciate that an aspect disclosed herein may be implemented independently of any other aspects and that two or more of these aspects may be combined in various ways. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. As an example of some of the above concepts, in some aspects concurrent channels may be established based on pulse repetition frequencies. In some aspects concurrent channels may be established based on pulse position or offsets. In some aspects concurrent channels may be established based on time hopping sequences. In some aspects concurrent channels may be established based on pulse repetition frequencies, pulse positions or offsets, and time hopping sequences.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

In addition, the various illustrative logical blocks, modules, and circuits described in connection with the aspects disclosed herein may be implemented within or performed by an integrated circuit ("IC"), an access terminal, or an access point. The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

It is understood that any specific order or hierarchy of steps in any disclosed process is an example of a sample approach. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

The steps of a method or algorithm described in connection with the aspects disclosed herein may be embodied directly in hardware, in a software module executed by a processor, or in a combination of the two. A software module (e.g., including executable instructions and related data) and other data may reside in a data memory such as RAM memory, flash memory, ROM memory, EPROM memory, EEPROM memory, registers, a hard disk, a removable disk, a CD-ROM, or any other form of computer-readable storage medium known in the art. A sample storage medium may be coupled to a machine such as, for example, a computer/processor (which may be referred to herein, for convenience, as a "processor") such the processor can read information (e.g., code) from and write information to the storage medium. A sample storage medium may be integral to the processor. The processor and the storage medium may reside in an ASIC. The ASIC may reside in user equipment. In the alternative, the processor and the storage medium may reside as discrete components in user equipment. Moreover, in some aspects any suitable computer-program product may comprise a computer-readable medium comprising codes relating to one or more of the aspects of the disclosure. In some aspects a computer program product may comprise packaging materials.

While the invention has been described in connection with various aspects, it will be understood that the invention is capable of further modifications. This application is intended to cover any variations, uses or adaptation of the invention following, in general, the principles of the invention, and including such departures from the present disclosure as come within the known and customary practice within the art to which the invention pertains.

**Claims**

1. A method of a user equipment, named UE hereinafter, for handling multiple device-to-device, named D2D hereinafter, grants for multiple sidelinks in decreasing order of priority, comprising:

a first UE (116) participates in a first sidelink and a second sidelink, wherein a priority of the first sidelink is higher than a priority of the second sidelink;

the first UE (116) receives a first D2D grant and a second D2D grant from a base station in a first scheduling assignment, named SA hereinafter, period;

the first UE (116) serves the first sidelink with the first D2D grant and afterward, the first UE (116) cannot serve the first sidelink with another D2D grant for the same SA period as the first D2D grant;

the first UE (116) serves the second sidelink with the second D2D grant and afterward, the first UE (116) cannot serve the second sidelink with another D2D grant for the same SA period as the second D2D grant; and

the first UE (116) uses the first D2D grant for transmitting available data of the first sidelink and uses the second D2D grant for transmitting available data of the second sidelink in a second SA period, wherein the second SA period and the first SA period are different SA periods.

2. The method of claim 1, wherein the first sidelink has an amount of available data that is closer to an amount of data accommodated by the first D2D grant than to an amount of data accommodated by the second D2D grant.

3. The method of any of the preceding claims, further comprising:

the first UE (116) receives a fourth D2D grant after it receives the first D2D grant and the second D2D grant in the first SA period, and discards the fourth D2D grant if resources indicated by the fourth D2D grant are less than resources indicated by the first D2D grant and also less than resources indicated by the second D2D grant and no sidelink can be served with the fourth D2D grant.

4. The method of any of the preceding claims, further comprising:

the first UE (116) reports a buffer status of the first sidelink and a buffer status of the second sidelink to the base station before a beginning of the second SA period.

5. The method of claim 4, wherein the first UE (116) reports the buffer status of the first sidelink and the buffer status of the second sidelink before the first D2D grant and the second D2D grant are received.

6. The method of claim 4 or claim 5, further comprising:

the first UE (116) transmits a buffer status report including the buffer status of the first sidelink and the buffer status of the second sidelink to the base station, wherein the buffer status report is a ProSe BSR.

7. The method of any of the preceding claims, wherein the priority of the first sidelink and the priority of the second sidelink are provided by a higher layer in the first UE (116), or are configured by a network.

8. The method of any of the preceding claims, wherein the first sidelink is associated to a second UE (122) or to a first destination, and the second sidelink is associated to a third UE or to a second destination.

9. The method of any of the preceding claims, wherein the second SA period is a SA period after the first SA period.

10. The method of any of the preceding claims, wherein neither the first D2D grant nor the second D2D grant can accommodate all available data of the first sidelink.

11. The method of any of the preceding claims, further comprising:

if the first UE (116) receives only one D2D grant, the second sidelink will not be served.

12. The method of any of the preceding claims, wherein the first sidelink and the second sidelink have available data for transmission.

13. The method of any of the preceding claims, further comprising:

the first UE (116) decides to serve the first sidelink with the first D2D grant and to serve the second sidelink with the second D2D grant based on at least buffer status of the first and second sidelinks, priority of the first and second sidelinks, and amount of resource provided in the received D2D grants.

14. A first UE (116) for handling multiple D2D grants for multiple sidelinks in decreasing order of priority, comprising:

a control circuit (306);
a processor (308) installed in the control circuit (306); and
a memory (310) installed in the control circuit (306) and operatively coupled to the processor (308);
wherein the processor (308) is configured to execute a program code (312) stored in the memory (310) to carrying out the method steps according to any one of the preceding claims.

**FIG. 1**

**FIG. 2**

*300*

INPUT
DEVICE
*302*

OUTPUT
DEVICE
*304*

CONTROL CIRCUIT *306*

CPU *308*

MEMORY *310*

PROGRAM CODE *312*

TRANSCEIVER *314*

# FIG. 3

PROGRAM CODE *312*

APPLICATION LAYER *400*

LAYER 3 *402*

LAYER 2 *404*

LAYER 1 *406*

**FIG. 4**

BSR1 (A: 20 B: 5 C: 5)

A1: PC5 MAC PDU (10)

A2: PC5 MAC PDU (5)

**FIG. 5**

BSR1 (A: 20 B: 5 C: 5) / BSR2 (A: 30 B: 10 C: 10)

FIG. 6

START

700

705

A first UE participates in a first sidelink and a second sidelink, wherein a priority of the first sidelink is higher than a priority of the second sidelink

710

The first UE receives a first D2D grant and a second D2D grant from a base station in a first SA period

715

The first UE serves the first sidelink with the first D2D grant and then cannot serve the first sidelink with other D2D grant for the same SA period as the first D2D grant

720

The first UE serves the second sidelink with the second D2D grant and then cannot serve the second sidelink with other D2D grant for the same SA period as the second D2D grant

725

The first UE uses the first D2D grant for transmitting available data of the first sidelink and uses the second D2D grant for transmitting available data of the second sidelink in a second SA period, wherein the first SA period and the second SA period are different SA periods

END

FIG. 7

| | Europäisches Patentamt European Patent Office Office européen des brevets | **EUROPEAN SEARCH REPORT** | **Application Number** EP 15 19 2356 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/093098 A1 (CHARBIT GILLES [GB] ET AL) 19 April 2012 (2012-04-19) | 1-3,7-14 | INV. H04W72/10 |
| Y | * paragraphs [0027] - [0030], [0045] - [0051]; figures 3, 5 * ----- | 4-6 | |
| Y | US 2013/150061 A1 (SHIN JAE SHEUNG [KR] ET AL) 13 June 2013 (2013-06-13) | 4-6 | |
| A | * paragraphs [0064], [0065], [0102] - [0109]; figures 5, 6, 7 * ----- | 1-3,7-14 | |
| A | WO 2010/082084 A1 (NOKIA CORP [FI]; NOKIA INC [US]; CHARBIT GILLES [GB]; CHEN TAO [FI]; H) 22 July 2010 (2010-07-22) * paragraphs [0006] - [0010], [0034] - [0040]; figures 2A, 2C, 4 * ----- | 1-14 | |
| A | WO 2014/130153 A1 (INTEL IP CORP [US]; NIU HUANING [US]; YIN HUJUN [US]; LI QINGHUA [US];) 28 August 2014 (2014-08-28) * page 3, lines 20-28; figures 3, 7 * * page 4, lines 12-19 * * page 10, line 23 - page 11, line 31 * ----- | 1-14 | TECHNICAL FIELDS SEARCHED (IPC) H04W |

The present search report has been drawn up for all claims

| Place of search | Date of completion of the search | Examiner |
|---|---|---|
| The Hague | 29 February 2016 | Stefan, Andrei |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 19 2356

This annex lists the patent family members relating to the patent documents cited in the above-mentioned European search report.
The members are as contained in the European Patent Office EDP file on
The European Patent Office is in no way liable for these particulars which are merely given for the purpose of information.

29-02-2016

| Patent document cited in search report | | Publication date | Patent family member(s) | | Publication date |
|---|---|---|---|---|---|
| US 2012093098 | A1 | 19-04-2012 | CN | 102246575 A | 16-11-2011 |
| | | | EP | 2342932 A1 | 13-07-2011 |
| | | | KR | 20110089311 A | 05-08-2011 |
| | | | US | 2012093098 A1 | 19-04-2012 |
| | | | WO | 2010049801 A1 | 06-05-2010 |
| US 2013150061 | A1 | 13-06-2013 | KR | 20130065373 A | 19-06-2013 |
| | | | US | 2013150061 A1 | 13-06-2013 |
| WO 2010082084 | A1 | 22-07-2010 | CN | 102334370 A | 25-01-2012 |
| | | | EP | 2384598 A1 | 09-11-2011 |
| | | | US | 2012106517 A1 | 03-05-2012 |
| | | | WO | 2010082084 A1 | 22-07-2010 |
| WO 2014130153 | A1 | 28-08-2014 | CN | 104919766 A | 16-09-2015 |
| | | | CN | 104919876 A | 16-09-2015 |
| | | | CN | 104937859 A | 23-09-2015 |
| | | | CN | 104937961 A | 23-09-2015 |
| | | | CN | 104937994 A | 23-09-2015 |
| | | | CN | 104937995 A | 23-09-2015 |
| | | | CN | 104938003 A | 23-09-2015 |
| | | | CN | 105103591 A | 25-11-2015 |
| | | | EP | 2959646 A1 | 30-12-2015 |
| | | | EP | 2959704 A2 | 30-12-2015 |
| | | | EP | 2959711 A1 | 30-12-2015 |
| | | | EP | 2959721 A1 | 30-12-2015 |
| | | | EP | 2959725 A1 | 30-12-2015 |
| | | | EP | 2959726 A1 | 30-12-2015 |
| | | | EP | 2959729 A1 | 30-12-2015 |
| | | | EP | 2959734 A1 | 30-12-2015 |
| | | | EP | 2959735 A1 | 30-12-2015 |
| | | | KR | 20150098668 A | 28-08-2015 |
| | | | KR | 20150098672 A | 28-08-2015 |
| | | | KR | 20150102066 A | 04-09-2015 |
| | | | KR | 20150102073 A | 04-09-2015 |
| | | | TW | 201436601 A | 16-09-2014 |
| | | | TW | 201446024 A | 01-12-2014 |
| | | | TW | 201503720 A | 16-01-2015 |
| | | | US | 2014269459 A1 | 18-09-2014 |
| | | | US | 2014295913 A1 | 02-10-2014 |
| | | | US | 2015036496 A1 | 05-02-2015 |
| | | | US | 2015105076 A1 | 16-04-2015 |
| | | | US | 2015359023 A1 | 10-12-2015 |
| | | | US | 2015359033 A1 | 10-12-2015 |
| | | | US | 2015365942 A1 | 17-12-2015 |
| | | | US | 2015373596 A1 | 24-12-2015 |

EPO FORM P0459

For more details about this annex : see Official Journal of the European Patent Office, No. 12/82

## ANNEX TO THE EUROPEAN SEARCH REPORT
### ON EUROPEAN PATENT APPLICATION NO.

EP 15 19 2356

This annex lists the patent family members relating to the patent documents cited in the above-mentioned European search report.
The members are as contained in the European Patent Office EDP file on
The European Patent Office is in no way liable for these particulars which are merely given for the purpose of information.

29-02-2016

| Patent document cited in search report | Publication date | Patent family member(s) | | Publication date |
|---|---|---|---|---|
| | | US | 2016014589 A1 | 14-01-2016 |
| | | US | 2016021526 A1 | 21-01-2016 |
| | | WO | 2014130091 A1 | 28-08-2014 |
| | | WO | 2014130092 A1 | 28-08-2014 |
| | | WO | 2014130093 A1 | 28-08-2014 |
| | | WO | 2014130094 A1 | 28-08-2014 |
| | | WO | 2014130143 A1 | 28-08-2014 |
| | | WO | 2014130144 A2 | 28-08-2014 |
| | | WO | 2014130153 A1 | 28-08-2014 |
| | | WO | 2014130154 A1 | 28-08-2014 |
| | | WO | 2014130156 A1 | 28-08-2014 |
| | | WO | 2014130157 A1 | 28-08-2014 |

EPO FORM P0459

For more details about this annex : see Official Journal of the European Patent Office, No. 12/82

**EP 3 016 465 A1**

REFERENCES CITED IN THE DESCRIPTION

**Patent documents cited in the description**

- US 62073353 A